# EUROPÄISCHE PATENTANMELDUNG

(11) **EP 4 102 146 A1**
(43) Veröffentlichungstag der Anmeldung: **14.12.2022**
(21) Anmeldenummer: 22174082.2
(22) Anmeldetag: 18.05.2022
(51) Int. Cl.: F24F 7/013, F24F 12/00

(54) **LÜFTUNGSVORRICHTUNG**

(30) Priorität: 09.06.2021 DE 202021103103 U
(71) Anmelder: SIEGENIA-AUBI KG, 57234 Wilnsdorf (DE)
(72) Erfinder: BECKER, Christoph, 57234 Wilnsdorf (DE); SASSMANNSHAUSEN, Jürgen, 57271 Hilchenbach (DE)
(74) Vertreter: Freudenberg, Thomas

(57) **Zusammenfassung**

Lüftungsvorrichtung 1 zur Belüftung und Entlüftung von Räumen eines Gebäudes, mit einem Luftkanal 2 zur Verbindung von einer Wand 3 getrennten Innenseite 4 des Raumes 5 mit einer Außenseite 6, mit einem in dem Luftkanal 2 angeordneten ersten Ventilator 7 und einem außenhalb der Wand 3 aufweisenden zweiten Ventilator 8, die in einem Betriebszustand gleichzeitig mit entgegengesetzten Luftförderrichtungen zur Förderung von einem Zuluft-Medienstrom 10 von der Außenseite 6 zur Innenseite 4 des Raumes 5 und zur Förderung von einem Abluft-Medienstrom 9 von der Innenseite 4 des Raumes 5 zur Außenseite 6 für einen kontinuierlichen Austausch betreibbar sind, wobei in dem Luftkanal 2 zwischen den Ventilatoren 7, 8 ein Rotationswärmetauscher 11 angeordnet ist, der mit dem Luftkanal 2 eine Symmetrieachse 16 bildet und von einem Antriebsmotor 13 angetrieben ist, wobei die jeweiligen Ventilatoren 7, 8 einen außenseitigen Übergangsbereich 17, 18 aufweisen, der sich aus einem umfänglichen Gehäusemantel 19, 20 zu einer Anströmfläche 21, 22 bildet, wobei der erste Ventilator 7 mit seinem Übergangsbereich 17 zur Symmetrieachse 16 ausgerichtet ist und der zweite Ventilator 8 mit einer Höhe 20 des Gehäusemantels 17 zur Symmetrieachse 16 lagepositioniert ist.

## Beschreibung

Die Erfindung betrifft eine Lüftungsvorrichtung zur Be- und Entlüftung von mindestens einem Raum eines Gebäudes nach dem Oberbegriff des Anspruchs 1. Dabei bezieht sich die Erfindung auf eine Lüftungsvorrichtung mit einer Wärmespeichereinheit zur Wärmeübertragung aus einem Abluft-Medienstrom auf einen Zuluft-Medienstrom. Bei einem Betriebszustand mit entgegengesetzten Luftförderrichtungen, ist die Lüftungsvorrichtung zur Förderung von Zuluft von der Außenseite zur Innenseite des Raumes und zur Förderung von Abluft von der Innenseite des Raumes zur Außenseite betreibbar. Schließlich umfasst die Lüftungsvorrichtung in einem Luftkanal die Wärmespeichereinheit, als Rotationswärmetauscher angetrieben von einem Antriebsmotor und einem ersten und einem zweiten Ventilator, die jeweils den Medienströmen zugeordnet sind. Ferner sind die Ventilatoren und der Rotationswärmetauscher der Symmetrieachse eines Luftkanals der Lüftungsvorrichtung zugeordnet, während die Drehachse des Rotationswärmetauschers auf der Symmetrieachse des Luftkanals liegt und sich damit die Symmetrieachse teilen, rotiert die Drehachse des ersten Ventilators auf der Symmetrieachse in einem Winkel geneigt und ist mit einem sich bildenden Übergang einer äußeren Ecke von einem Gehäusemantel zu einer Anströmfläche der Symmetrieachse zugeordnet. Die Achse des zweiten Ventilators ist dagegen parallel zur Symmetrieachse ausgerichtet.

Lüftungsvorrichtungen dieser Art sind bereits bekannt durch die EP 3 168 544 B1. Die Erfindung betrifft eine Belüftungsvorrichtung zum Be- und Entlüften eines Raumes. Eine solche Belüftungsvorrichtung umfasst einen Luftkanal zur Verbindung einer Innenseite des Raumes mit einer Außenseite, d.h. einer äußeren Umgebung außerhalb des Gebäudes, in welchem sich der betreffende Raum befindet. In dem Luftkanal ist ein Axialventilator angeordnet, der in mindestens zwei Betriebszuständen mit entgegengesetzten Luftförderrichtungen zur Förderung von Zuluft von der Außenseite zur Innenseite des Raumes und zur Förderung von Abluft von der Innenseite des Raumes zur Außenseite betreibbar ist. Schließlich umfasst die Belüftungsvorrichtung auch einen in dem Luftkanal zwischen dem Axialventilator und der Außenseite angeordneten Wärmespeicher. Zwar wird die Wärmespeichereinheit vollflächig von dem Zuluft-Medienstrom und von dem Abluft-Medienstrom durchströmt, jedoch ist die Lüftungsvorrichtung im Reversierbetrieb betrieben. Dazu ist ein Axialventilator in mindestens zwei Betriebszuständen mit entgegengesetzten Luftförderrichtungen betreibbar. Ein Betriebszustand dient der Förderung von Zuluft von der Außenseite zur Innenseite des Raumes, im anderen Betriebszustand wird Abluft von der Innenseite des Raumes zur Außenseite gefördert. Durch die zyklisch arbeitende Lüftungsvorrichtung ergeben sich Nachteile bei der Effizienz der Wärmerückgewinnung und dem Volumenstrom des Luftaustausches.

In der DE 20 2014 003 368 U1 wird ein Lüftungsgerät zur Innenraumbelüftung in Gebäuden beschrieben, welches über zwei getrennte Luftwege verfügt, wobei in jedem der Luftwege ein Ventilator angeordnet ist. Die Drehachse der Ventilatoren ist jeweils schräg zu einer Längsausrichtung der Kanäle angeordnet. Der Aufbau zweier Ventilatoren in einem Luftkanal anzuordnen, ist komplex und daher kostenintensiv. Zudem werden die zwei Ventilatoren in der Größe mit Anordnung im Luftkanal in der Größe des Luftkanals, in Abhängigkeit gestellt. Zielsetzend ist ein kleiner Aufbau der Lüftungsvorrichtung und damit ein mit geringem Aufwand herzustellenden Wanddurchbruch. Eine Anordnung zweier Ventilatoren im Luftkanal, die zudem unmittelbar angrenzend im Luftkanal ausgebildet sind, bewirkt bei einem vorzugsweise kleinen Aufbau des Luftkanals und damit der Lüftungsvorrichtung eine Einschränkung des Volumenstroms. Zudem ist die Anordnung nicht wartungsfreundlich, da die Lüfter schwer zugänglich sind und besondere Befestigungsmittel benötigen.

Außerdem wird in der DE 20 2009 009 697 U1 eine Rotationswärmetauschereinheit mit einem getriebelosen Außenläufermotor als Antriebsaggregat und einem Rotationswärmetauscher beschrieben. Dabei treibt ein Antriebsrotor des Außenläufermotors mittels direkter Form und/ oder Reibschluss mit dem Rotationswärmetauscher den Rotationswärmetauscher ohne Kopplungseinrichtung, unmittelbar an.

Der Erfindung liegt nun die Aufgabe zugrunde, eine Lüftungsvorrichtung der eingangs erwähnten Art zu schaffen, die die Nachteile des Standes der Technik überwindet. Gleichzeitig soll mit der Lüftungsvorrichtung bei kleinem Aufbau, eine hohe Luftleistung, bei geringem Eigengeräusch und hohem Wärmerückgewinnungsgrad erreicht werden.

Während die Lüftungsvorrichtungen des bekannten Standes der Technik in der Abluftphase die Wärmespeichereinheit die Wärme der Raumluft aufnimmt und speichert und anschließend der Zuluftbetrieb die frische Außenluft durch die Wärmespeichereinheit fördert und dessen Wärme aufnimmt, so dass die frische Luft vorgewärmt in den Wohnraum strömt, entsteht nachteilig ein Energieverlust durch den phasenversetzten Betrieb. Bei der erfindungsgemäßen Lüftungsvorrichtung in ein Umschalten aufgrund der baulichen Anordnung und der eingesetzten Bauteile nicht notwendig, so dass ein kontinuierlicher Abluft- und Zuluftbetrieb bei einer ausgleichenden Luftbilanz sichergestellt ist.

Die Erfindung beschreibt dazu eine Lüftungsvorrichtung mit einem Be- und Entlüftungsgerät zur Rückgewinnung der Abluftwärme für Wohn- und Aufenthaltsräume, Büros, Schulen, Lager und Arbeitsräume mit einem kastenförmigen, auf einer Gebäudewand und/oder in Zwischendecken montierbaren Gehäuse und einem Luftkanal zur Verbindung von einer durch die Gebäudewand getrennte Außenseite und Innenseite des Raumes. Ein erster Ventilator ist in dem Luftkanal lagepositioniert. Ein zweiter Ventilator positioniert sich vorzugsweise außerhalb des Luftkanals, in einer bevorzugten Ausführungsart an der Gebäudewand in dem Gehäuse. Unabhängig voneinander arbeitend, fördern die Ventilatoren einen Luftstrom oder Luftmedienstrom. Durch einen permanent kontinuierlichen Betrieb der Ventilatoren, bleibt die Luftstromleistung anhaltend konstant. Sowohl der durch den im Luftkanal betriebene erste Ventilator für einen Abluft-Medienstrom, als auch der im Gehäuse angeordnete Ventilator für einen Zuluft-Medienstrom, sorgen im Betriebszustand in entgegengesetzter Luftförderrichtung für einen gleichzeitig kontinuierlichen Luftstromaustausch. Zu dem Zweck der Wärmerückgewinnung ist zwischen den Ventilatoren ein Rotationswärmetauscher angeordnet, der von einem Antriebsmotor angetrieben im Luftkanal positioniert und mit dem Luftkanal eine Symmetrieachse teilt. Dabei ist der Luftkanal in zwei Luftleitführungen aufgeteilt, die den Zuluft-Medienstrom von dem Abluft-Medienstrom räumlich voneinander trennen. Vorzugsweise ist zumindest der erste Ventilator ein Radialventilator, der sich mit seiner Anströmfläche und einer Öffnung für den Abluft-Medienstrom in einer der zwei Luftleitführungen angeordnet sind.

Bei dem Rotationswärmetauscher, auch Wärmerad genannt, dreht sich ein Rotor als fester Speicher. Bei der ständigen Drehbewegung im dauerhaften Betrieb, strömt abwechselnd aus einer Richtung der warme Abluft-Medienstrom und aus der anderen Richtung die kalte Außenluft, der Zuluft-Medienstrom, durch den Rotor. Dieser wird durch den einen Luftstrom aufgewärmt und durch den anderen abgekühlt. Dabei überträgt die Rotor Speichermasse die Energie zwischen beiden Luftströmen. Die Ventilatoren, sind dabei an den jeweiligen längsseitigen Enden des Rotationswärmetauschers positioniert. Vorzugsweise teilen sich die Ventilatoren jeweils hälftig eine Querschnittsfläche des Rotationswärmetauschers. Der erste im Luftkanal angeordnete Ventilator saugt den Abluft-Medienstrom an und ist in vorteilhafter Lage mit seinem Übergangsbereich von seinem umfänglichen Gehäusemantel zur Anströmfläche der Symmetrieachse des Luftkanals und des Rotationswärmetauschers zugeordnet, wobei sich der weitere Verlauf des Übergangsbereichs von der Symmetrieachse zunehmend abwendet, so dass die Anströmfläche mit seiner Stirnseite der hälftigen Querschnittsfläche des Rotationswärmetauscher Drehachsen geneigt zur Symmetrieachse gerichtet ist. Der erste Ventilator saugt durch eine hälftige Querschnittsfläche des Rotors den warmen Abluft-Medienstrom an, so dass sich die Kanalwandungen des Rotationswärmetauschers aufwärmen. Durch die andere Hälfte des Rotors strömt vorzugsweise angesaugt vom zweiten Ventilator kalter Zuluft-Medienstrom.

In vorteilhafter Weise ist der zweite Ventilator außerhalb des Luftkanals an der Gebäudewand in einem Gehäuse der Lüftungsvorrichtung angeordnet. Für eine optimale Luftstromleistung ist der Gehäusemantel des zweiten Ventilators mit seiner Höhe zur Symmetrieachse des Luftkanals und des Rotationswärmetauschers ausgerichtet. Die Drehachse des zweiten Ventilators verhält sich dabei parallel zur Symmetrieachse, so dass sich die Anströmfläche auf die hälftige Querschnittsfläche des Rotationswärmetauschers zeigend parallel zu dieser ausrichtet. Mit Drehen des Rotors, erreichen die aufgewärmten Kanäle des Rotationswärmetauschers den Bereich, wo sie kalter Zuluft-Medienstrom durchströmt. Dieser wärmt sich an den warmen Kanälen des Abluft-Medienstroms auf, wodurch sich die Kanalwandungen abkühlen. Der zweite Ventilator ist dazu in vorteilhafter Anordnung orthogonal zur Symmetrieachse des Luftkanals und dem Rotationswärmetauscher lagepositioniert.

In der Zusammenschau der Ventilatoren mit dem Rotationswärmetauscher der erfindungsgemäßen Lüftungsvorrichtung, erhöht sich die Effizienz der Wärmerückgewinnung, da die Lüftungsvorrichtung im Unterschied zu herkömmlichen Lüftungsgeräten einerseits in der Lage ist, die an sich bekannte Weise Wärme durch den Rotationswärmetauscher zu regenerieren, indem er in der Lage ist, im permanenten Betrieb der Ventilatoren Wärme aus dem Abluft-Medienstrom zwischen zu speichern und an einen getrennt gegenläufigen Zuluft-Medienstrom wieder abzugeben, ohne eine zeitliche Ruhephase und einen Leistungsabfall.

In einer vorteilhaften Ausführungsform weist der erste Ventilator im Luftkanal umschließend um seinen äußeren Gehäusemantel ein Trennelement auf, das eine horizontale Ebene mit der Symmetrieachse des Luftkanals und des Rotationswärmetauschers bildet und sich mit einem Ende einer ersten Seite des Rotationswärmetauschers anschließt. Das Trennelement überdeckt im Luftkanal mindestens die Anströmfläche des ersten Ventilators und teilt den Luftkanal im Querschnitt in zwei gleiche halbkreisförmige Hälften auf, welche die Luftleitführung für Abluft und Zuluft auf der Seite des ersten Ventilators zum Rotationswärmetauscher bilden. Zwischen dem zweiten Ventilator und der zweiten Seite des Rotationswärmetauschers schließt sich ein umschlossener Kanal bildendes Führungselement an, das mit einer horizontalen Fläche der Symmetrieachse des Luftkanals und des Rotationswärmetauschers zugeordnet ist und die Luftleitführung für Abluft und Zuluft auf der Seite des zweiten Ventilators zum Rotationswärmetauscher bewirken. Die Ausgestaltung verleiht der Lüftungsvorrichtung außerhalb des Rotationswärmetauscher einen getrennten Luftmedienstrom zweier entgegengesetzt durchlaufender Medienströme von Zuluft und Abluft durch die Lüftungsvorrichtung. Erst mit Anfang des Rotationswärmetauschers endet die Zweistrom bildende Kanalführung. Im drehbeweglichen Betrieb des Rotors vereinen sich die unterschiedlichen Temperaturdifferenzen der Luftmedienströme. Ein kalter Zuluft-Medienstrom verändert mit Durchlaufen seine von der Außenseite existente Eintrittstemperatur und bläst erwärmte Luft in die Innenseite des Raumes.

Vorzugsweise ist das Führungselement dazu außerhalb des Luftkanals auf der Innenseite des Raumes in einem Gehäuse angeordnet. Für einen optimalen Anschluss einer zuweisenden Seite des Führungselementes an den Rotationswärmetauscher, schließt der Rotationswärmetauscher mit seiner zweiten Seite mit dem zur Innenseite weisenden Ende des Luftkanals bündig ab. Die Anströmfläche des zweiten Ventilators wird von der anderen Seite des Führungselementes umfänglich geschlossen. Das Führungselement bildet eine Brücke für den Zuluft-Medienstrom in Richtung Rotationswärmetauscher, die aufgrund der Anordnung klein und kompakt ausgebildet ist. Beide Anströmflächen weisen auf den Rotationswärmetauscher hin.

Die Anordnung des Trennelementes über die horizontale Ebene und die horizontale Fläche des Führungselementes ermöglichen eine zusätzliche räumliche Trennung der Luftströme beim Übergang zwischen den Ventilatoren und dem Rotationswärmetauscher. In einem Gegenstrombetrieb wird so die angesogene Luft in einem Abstand zur frisch eingeströmten Luft angesaugt, so dass eine Vermischung von beiden Luftströmen vermieden wird, aber eine Vermischung von Warm und Kalt im Rotationswärmetauscher erreicht wird.

Bevorzugt reicht der erste Ventilator mit seiner Anströmfläche am Übergangsbereich zum Gehäusemantel an eine horizontal gedachte Schnittebene des ersten Endes des Rotationswärmetauschers heran und ist einer ersten hälftigen Querschnittsfläche des Rotationswärmetauschers zugeordnet, so dass die Anströmfläche zum Ansaugen des Abluft-Medienstroms und die Öffnung zum Austreten des Abluft-Medienstrom für den weiteren Transport des Luftstroms innerhalb der Luftleiführung für Abluft am Radialventilator lagepositioniert sind. Auch der zweite Ventilator reicht mit seiner Anströmfläche vom Gehäusemantel an die horizontal gedachte Schnittebene des zweiten Endes des Rotationswärmetauschers heran und ist einer zweiten hälftigen Querschnittfläche des Rotationswärmetauschers zugehörig. Mit einem geführten Medienstrom von der Abluft und der Zuluft und einer Aufteilung der Querschnittfläche des Rotationswärmetauschers für die Medienströme, wird ein gleichmäßig kontrollierter Wirkungsgrad erzielt.

Weiter vorteilhaft ist, dass das Trennelement am ersten Ventilator angrenzend an die zur Außenseite weisende Seite des Rotationswärmetauscher und das Führungselement mit der horizontalen Fläche an die zur Innenseite gerichtete Seite des Rotationswärmetauschers anliegend zwei getrennte Strömungskanäle im Luftkanal bilden, von dem ein Strömungskanal den Abluftkanal und ein Strömungskanal den Zuluftkanal ausbildet. Der erste und zweite Luftstrom, sind dabei fluidisch, damit Leistung bezogen auf den Massestrom, in der innenraumseitigen Lüftungsvorrichtung vollständig getrennt wird. Die Anordnung der innenraumseitigen Einlässe und Auslässe, vorzugsweise an einem Gehäusedeckel des Gehäuses angeordnet, ermöglichen eine zusätzliche räumliche Trennung der Luftströme beim Übergang zwischen Innenseite des Raumes und Lüftungsvorrichtung. So wird eine Vermischung von beiden Luftströmen vermieden. Die direkte Anordnung der Bauteile erlaubt eine kompakte Bauweise der Lüftungsvorrichtung. Für Gebäudewände mit dünnen Wandstärken findet die Lüftungsvorrichtung ebenso Verwendung, wie auch für Gebäudewände mit dicken Wandungen. Außerdem gewinnt die Lüftungsvorrichtung auf die Länge durch das Trennelement und dem Führungselement an Stabilität des Grundgerüstes des Luftkanals.

Als kostengünstig und einfach in der Montage erweist sich die Lüftungsvorrichtung dadurch, dass der Luftkanal und der Rotationswärmetauscher im Querschnitt zylindrisch ausgebildet sind. Ein Durchbruch in der Gebäudewand für den Luftkanal der Lüftungsvorrichtung, lässt sich durch die zylindrische Ausbildung einfach und kostengünstig mittels einer Bohrkrone herstellen.

Zur Effizienzsteigerung und Vollauslastung der Wärmerückgewinnungseinrichtung, sind in einer bevorzugten Ausgestaltung der Lüftungsvorrichtung der erste Ventilator und der zweite Ventilator als Radialventilatoren ausgebildet. Der erste Ventilator fördert den Abluft-Medienstrom aus der Innenseite zur Außenseite durch den Abluftkanal, wobei der zweite Ventilator den Zuluft-Medienstrom von der Außenseite zur Innenseite durch den Zuluftkanal fortbewegt. Beide Medienströme durchströmen dabei permanent den Rotationswärmetauscher. Die Radialventilatoren pressen die angesogene warme Raumluft sehr kraftvoll und leiten diese gebündelt um. Die Radialventilatoren eignen sich ideal für den Anschluss der Lüftungsvorrichtung zur kontrollierten Wohnraumlüftung in Verbindung mit dem Rotationswärmetauscher. Um den Luftstrom mit einströmender, kühler Außenluft über das wärmespeichernde Modul des Rotationswärmetauschers optimal in einen warmen Luftstrom umzuwandeln, so dass der beheizte Luftstrom seine Energie in die Innenseite des Raums leiten kann, bedarf es nach der erfindungsgemäßen Ausgestaltung einer geschlossenen Lüftungsvorrichtung. Der Luftstrom des Zuluft-Medienstroms und Abluft-Medienstroms benötigt eine bestimmte Strecke von der Außenseite zur Innenseite und umgekehrt, die je nach Stärke der Gebäudewand variieren kann. Hinzu kommt die Umwandlung von einem kühlen Zuluft-Medienstrom in einen warmen Zuluft-Medienstrom im Rotationswärmetauscher, bevor sie in die Innenseite des Raums geleitet wird. Solche Strecken mit einer Wärmebehandlung werden mit der Wahl von Radialventilatoren einfach und leistungsbeständig bewältigt. Die während des Betriebszustandes kontinuierlich in eine Drehrichtung arbeitenden Radialgebläse der Lüftungsvorrichtung, erreichen einen geeigneten Nennvolumenstrom, eine hohe Druckstabilität und einen gleichbleibenden Volumenstrom. Der kontinuierliche Betrieb führt außerdem zu relativ niedrigen Betriebskosten und schont die Luftfördereinrichtung, so dass diese verschleißarm und nahezu geräuschlos arbeitet.

Aufgrund getrennter Anordnung der Ventilatoren, kann jeder Ventilator dem Bauraum der Lüftungsvorrichtung der Größe entsprechend angepasst werden. Um den Luftkanal im Querschnitt für eine vereinfachte Montage in die Gebäudewand bei optimaler Luftleistung der Ventilatoren in seinen Abmaßen klein und kostengünstig auszuführen zu können, ist der im Luftkanal angeordnete erste Ventilator dem Querschnitt des Luftkanals angepasst. Ferner ist die Drehachse des ersten Ventilators zu der Symmetrieachse des Luftkanals unter einem spitzen Winkel geneigt ausgerichtet, wobei die Drehachse des zweiten Ventilators mit einem parallelen Abstand zur Symmetrieachse des Luftkanals verläuft und außerhalb des Luftkanals an der Gebäudewand positioniert ist. Durch die schräge Drehachse des rotierenden Ventilatorrades des Ventilators zur Symmetrieachse des Luftkanals, wird der Abluft-Medienstrom vor dem Eintritt in den Rotationswärmetauscher zusätzlich verwirbelt, so dass der Rotationswärmetauscher gleichmäßiger angeströmt werden kann. Eine solche Anordnung des Ventilators führt auch zu einem niedrigen Stromverbrauch. Insbesondere ist es hierbei vorteilhaft, wenn die Drehachse des Ventilatorrades um einen Winkel zwischen 10° und 80° in Relation zu einer Längsausrichtung des Luftkanals und damit zur Symmetrieachse gedreht ist.

Aufgrund der im Querschnitt zylindrischen Ausbildung des Luftkanals, empfiehlt es sich den Gehäusemantel der Ventilatoren nahezu vollumfänglich kreisförmig auszubilden. Mit Ausführung als Radialventilatoren, ist der umfängliche Gehäusemantel zum größten Teil kreisförmig ausgebildet. Mit Anordnung der Öffnung am Gehäusemantel, entsteht eine schneckenförmige Ummantelung. Ebenso sind in vorteilhafter Weise auch die Anströmflächen der Ventilatoren umfänglich ringförmig ausgebildet.

Die erfindungsgemäße Lüftungsvorrichtung ermöglicht es, die Effizienz der Wärmerückgewinnung zu steigern und gleichzeitig den Platzbedarf weiter zu verringern, in dem sich an den Luftkanal der Lüftungsvorrichtung ein Gehäuse anschließt, welches auf der Innenseite des Raumes an der Gebäudewand angeordnet ist. Mit Beibehaltung des zylindrischen Querschnitts und Größe des Luftkanals, der dem Querschnitt des Rotationswärmetauschers entspricht, nimmt das Gehäuse den Antriebsmotor und den zweiten Ventilator auf, wobei der erste Ventilator und der Rotationswärmetauscher dem Luftkanal zugeordnet sind. Außerdem lassen sich alle weiteren funktionellen Komponenten im Gehäuse anordnen. So beinhaltet das Gehäuse Kanäle für eine Luftführungseinrichtung zur Führung des Zuluft-Medienstroms und eine Luftführungseinrichtung zur Führung des Abluft-Medienstroms mit jeweils getrennten Einlässen und Auslässen an den Wandungen des Gehäusedeckels auf der Innenseite des Raumes. Die Lüftungsvorrichtung weist erfindungsgemäß im Gehäuse, vorzugsweise auf einer Gehäuseplatte unbeweglich befestigt eine elektronische Steuerungseinrichtung auf, die ausgebildet ist, den Empfang eines Steuersignals auf den ersten oder den zweiten Ventilator in einer durch das Steuersignal definierten Drehzahl und Drehrichtung in Betrieb zu setzen. Das Steuersignal kann dabei sowohl direkt an der Lüftungsvorrichtung, beispielsweise durch eine Nutzereingabe erzeugt werden, oder aber es ist der Empfang des Steuersignals beispielsweise von einer zentralen Steuerungseinrichtung möglich. Dieses kann sowohl über eine Verkabelung als auch über drahtlose Vermittlung erfolgen. Unterschiedliche Drehzahlen der Ventilatoren entsprechen dabei unterschiedlichen Volumenströmen des jeweiligen Luftstroms.

Die Steuerungseinrichtung arbeitet dabei vorrangig für die stufenlose Steuerung der Drehzahl und Drehrichtung einer Rotoreinheit des Antriebsmotors und kann separat angeordnet sein. Ein besonders kompakter Aufbau lässt sich dadurch erzielen, dass die Steuerungseinrichtung integriert an dem Antriebsmotor vorhanden ist. Dabei zeichnet sich eine besonders vorteilhafte konstruktiv einfache und kompakte Ausgestaltung dadurch aus, dass der Antriebsmotor ortsfest im Gehäuse gelagert ist. Vorzugsweise ist der Antriebsmotor ein Elektromotor, der mit seiner Drehachse außerhalb des zylindrischen Umfangs des Rotationswärmetauschers und versetzt zu dessen Symmetrieachse angeordnet ist.

Dass der Antriebsmotor vorzugsweise ein Außenläufermotor ist, der mittels eines Antriebsrotors durch ein Form- und/oder Reibschluss den Rotationswärmetauscher ohne Kopplungseinrichtung unmittelbar antreibt, vereinfacht den konstruktiven Aufbau durch Verwendung weniger Komponenten, verkleinert die Bauweise und vereinfacht die Wartung. Rotationswärmetauscher mit Außenläufermotor anstelle von Motoren auf der Dreh- oder Symmetrieachse ermöglichen es, den Antrieb zu vereinfachen, da keine Kopplungseinheit benötigt wird. Dies erspart ein kompliziertes Justieren und Nachstellen der Kopplungseinheit während des Betriebs und reduziert die Anzahl der Teile und damit den Platzbedarf, die Kosten und den Montageaufwand.

Eine weitere vorteilhafte Ausgestaltung der Lüftungsvorrichtung wird dadurch bewirkt, dass die Rotoreinheit und der Rotationswärmetauscher berührend nebeneinander angeordnet sind, wobei die Rotoreinheit des Antriebsmotors und/oder der Rotationswärmetauscher an ihren Außenumfängen ein Oberflächenmaterial mit geeignet hohem Rollreibungsbeiwert aufweisen, so dass sie reibschlüssig miteinander über die Oberflächen der Außenumfänge direkt verbunden sind.

Zur Erreichung einer geräuschlosen und nahezu übergangslosen Arbeit des Antriebsmotors auf den Rotationswärmetauscher, weist der Antriebsmotor und der Rotationswärmetauscher an ihren Außenumfängen eine Verzahnung auf, so dass sie formschlüssig ineinandergreifen und über die Verzahnung direkt verbunden sind. Vorteil dieser Ausgestaltung ist, neben den schon oben genannten Vorteilen, dass die Verzahnung besonders effektiv gegen einen Schlupf des Antriebsmotors relativ zum Rotationswärmetauscher wirkt.

Weitere vorteilhafte Ausgestaltungen ergeben sich aus den Zeichnungen. Es zeigt:
- Fig. 1: eine perspektivische Darstellung der Lüftungsvorrichtung mit Darstellung der Vorderansicht, Draufsicht und der Seitenansicht,
- Fig. 2: eine perspektivische Darstellung der Lüftungsvorrichtung mit Darstellung der Vorderansicht, Draufsicht und der Seitenansicht nach Fig. 1 mit entferntem Gehäusedeckel,
- Fig. 3: eine perspektivische Darstellung eines Gehäuses ohne Gehäuseplatte der Lüftungsvorrichtung mit Darstellung der Vorderansicht, Draufsicht und der Seitenansicht,
- Fig. 4: eine perspektivische Darstellung eines Gehäuses ohne Gehäuseplatte der Lüftungsvorrichtung mit Darstellung der Vorderansicht, Draufsicht und der Seitenansicht nach Fig. 3,
- Fig. 5: eine Schnittdarstellung einer Seitenansicht der Lüftungsvorrichtung nach Fig. 1 durch den Bereich eines Luftkanals und eines Gehäuses mit den darin enthaltenen Funktionsbauteilen,
- Fig. 6: eine perspektivische Darstellung des Luftkanals mit perspektiver Ansicht eines im Luftkanal angeordneten Ventilators nach Fig. 5,
- Fig. 7: in perspektivischer Ansicht ein Rotationswärmetauscher mit einem Antriebsmotor,
- Fig. 8: in vergrößerter Ausschnittdarstellung nach Fig. 7 die Kupplung des Antriebsmotors zum Rotationswärmetauscher und
- Fig. 9: in vergrößerter perspektivischer Ansicht die Einzelteildarstellung des Antriebsmotors.

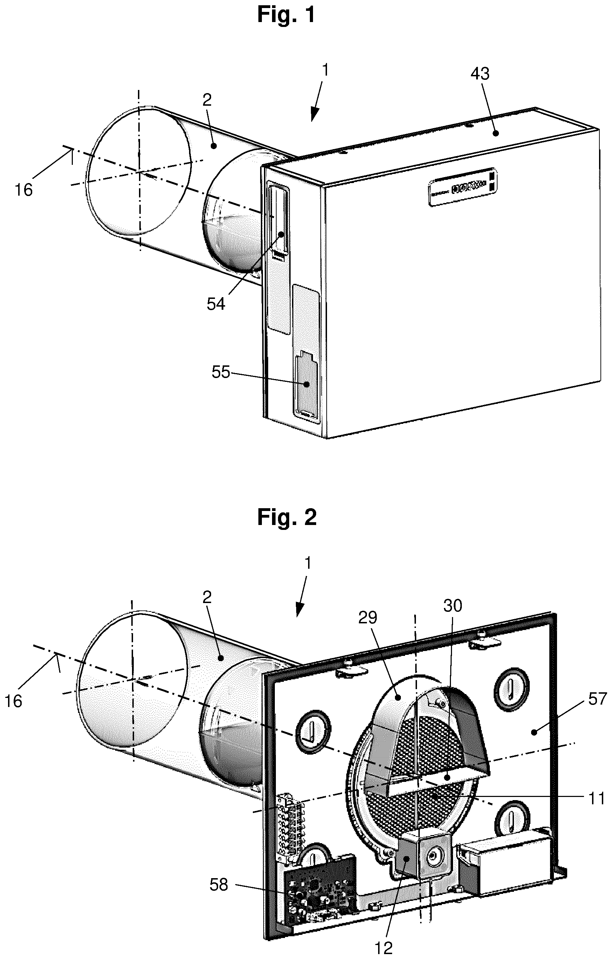

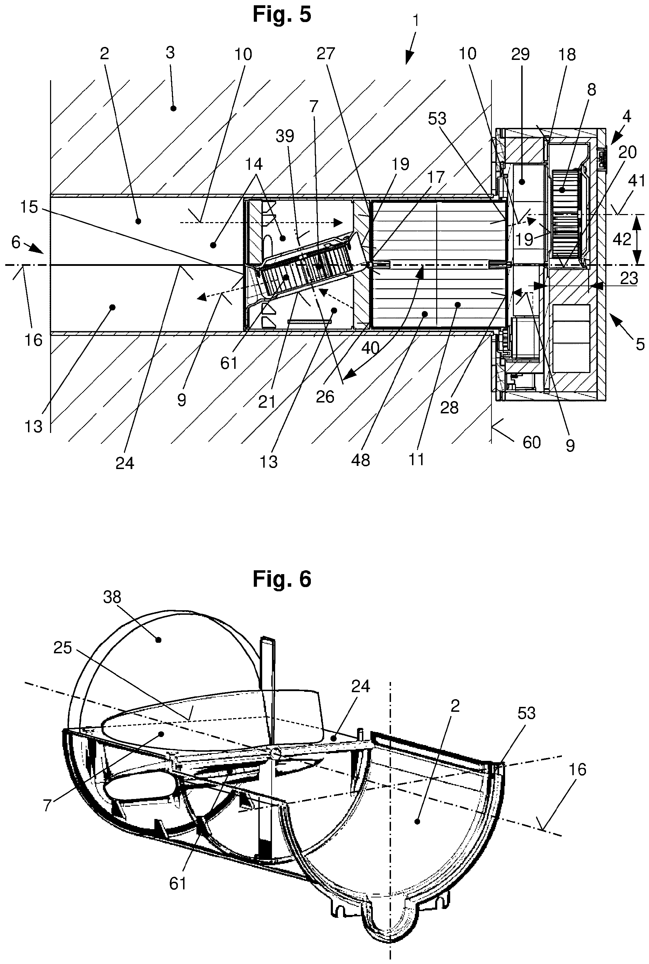

Fig. 1 der Zeichnung zeigt eine perspektivische Darstellung der Lüftungsvorrichtung 1 mit einem Luftkanal 2 und einem Gehäuse 43 zum gleichzeitigen Belüften und Entlüften von Räumen 5. Die Lüftungsvorrichtung 1 lässt sich nach Fig. 1 vorzugsweise von der Rauminnenseite 4 oder aber auch nach Bedarf nicht dargestellt von der Außenseite 6 in einer Gebäudewand 3 nach Fig. 5 befestigen, die insbesondere als Fassadenwand ausgebildet sein kann. Dabei weist die Gebäudewand 3 nach Fig. 5 von der Innenseite 4 des Raumes 5 zur Außenseite 6 einen Durchbruch auf, der vorzugsweise eine zylindrische Form aufweist. Die Lüftungsvorrichtung 1 kann auch in einem eigens konzipierten Durchbruch in der Gebäudewand 3 verwendet werden.

Nach Fig. 5 ist ein erster Ventilator 7 in dem Luftkanal 2 lagepositioniert. Ein zweiter Ventilator 8 positioniert sich außerhalb des Luftkanals 2 in einer bevorzugten Ausführungsart an der Gebäudewand 3 in dem Gehäuse 43. Im Betrieb arbeiten die Ventilatoren 7, 8 unabhängig voneinander und fördern einen Luftstrom oder Luftmedienstrom von der Außenseite 6 zur Innenseite 4 und von der Innenseite 4 zur Außenseite 6. Im dauerhaften Betrieb der Ventilatoren 7, 8, bleibt die Luftstromleistung für ein Abluft-Medienstrom 9 und für ein Zuluft-Medienstrom 10 konstant und sorgen im Betriebszustand in entgegengesetzter Luftförderrichtung für einen gleichzeitig kontinuierlichen Luftstromaustausch.

Zwischen dem Ventilator 7 und dem Ventilator 8, ist in dem Luftkanal 2 nach Fig. 2 und Fig. 5 ein Wärmespeicher als Rotationswärmespeicher 11, der auch als Wärmetauscher fungiert, angeordnet. Wird dieser mit Luft durchströmt, nimmt er bei konstantem Luftstrom die Temperatur der Luft an. Wird beispielsweise von außen kühlere Luft eingezogen, kühlt sich der Rotationswärmespeicher 11 ab. Wird anschließend von innen wärmere Luft nach außen geblasen, so kühlt der Rotationswärmespeicher 11 diese Luft ab, erwärmt sich jedoch gleichzeitig. Bei kontinuierlicher Luftströmung von beiden Richtungen, wirkt der Rotationswärmespeicher 11 dann wie ein Wärmetauscher, erwärmt die eingesogene Luft und kühlt sich dabei selbst ab. Gut geeignet sind dabei keramische oder aus Kunststoff gefertigte Rotationswärmespeicher 11, die neben einer hohen Wärmekapazität auch resistent gegen Keimbildung sind, sofern sie nicht dauerhaft Feuchtigkeit ausgesetzt sind und in regelmäßigen Intervallen durch Erwärmen getrocknet werden.

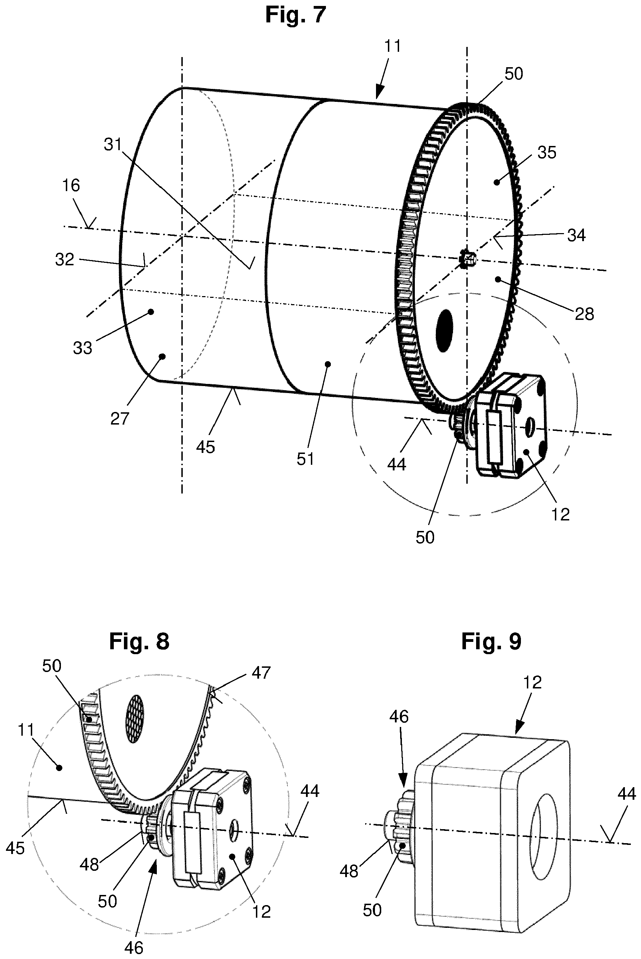

Zu dem Zweck der Wärmerückgewinnung, wird der zwischen den Ventilatoren 7, 8 vorzugsweise als Wärmespeicher funktionierende Rotationswärmetauscher 11 von einem Antriebsmotor 12 nach Fig. 5 und Fig. 7 bis Fig. 9 angetrieben, im Luftkanal 2 positioniert und teilt sich mit dem Luftkanal 2 eine Symmetrieachse 16. Bei dem Rotationswärmetauscher 11, auch Wärmerad genannt, dreht sich nach Fig. 7 ein Rotor 51 als fester Speicher. Bei der ständigen Drehbewegung im dauerhaften Betrieb, strömt nach Fig. 5 abwechselnd aus einer Richtung der warme Abluft-Medienstrom 9 aus der aufgewärmten Innenseite 4 des Raumes 5 und aus der anderen Richtung die kalte Außenluft von der Außenseite 6 der Gebäudewand 3, der Zuluft-Medienstrom 10, durch den Rotor 51. Dieser wird durch den einen Luftstrom aufgewärmt und durch den anderen abgekühlt. Dabei überträgt der Rotor 51 Speichermasse die Energie zwischen beiden Luftströmen 9, 10. Für eine kompakte Bauweise der Lüftungsvorrichtung 1, sind die Ventilatoren 7, 8 zu den jeweiligen längsseitigen Enden 26, 53 des Rotationswärmetauschers 11 zu den Seitenflächen 27, 28 positioniert. Nach Fig. 5 teilen sich die Ventilatoren 7, 8 jeweils hälftig eine Querschnittsfläche 33, 35 der Seitenflächen 27, 28 des Rotationswärmetauschers 11. Zu dem Zweck, sind die Ventilatoren 7, 8 als Radialventilatoren ausgebildet. Außerdem teilt sich der Luftkanal 2 in zwei Luftleitführungen 13, 14 auf, die den Zuluft-Medienstrom 10 von dem Abluft-Medienstrom 9 räumlich voneinander trennen. Der erste im Luftkanal 2 angeordnete Ventilator 7, ist mit seiner Anströmfläche 21 zum Ansaugen des Abluft-Medienstroms 9 und mit einer Öffnung 15 zum Ausströmen des Abluft-Medienstroms 9 aus dem Ventilator 7 in Richtung der Außenseite 6, in einer Luftleitführung 13 der Luftleitführungen 13, 14 angeordnet. Die Luftleitführungen 13, 14 enden am Rotationswärmetauscher 11. Nach Fig. 5 weist der erste Ventilator 7 mit seiner Anströmfläche 21 zum Rotationswärmetauscher 11 und saugt den Abluft-Medienstrom 9 an. Im Ventilator 7 wird der Abluft-Medienstrom 9 um einen 90° versetzten Winkel auf die Öffnung 15 eines umfänglichen Gehäusemantels 19 ausblasend umgeleitet. Gleichwirkend arbeitet der Ventilator 8 mit dem Zuluft-Medienstrom 10. Der erste im Luftkanal 2 angeordnete Ventilator 7 saugt den Abluft-Medienstrom 9 durch die Luftleitführung 13 an. Mit einem Übergangsbereich 17, der von seinem umfänglichen Gehäusemantel 19 übergehend zur Anströmfläche 21, vorzugsweise im 90° Winkel entsteht, ist mit seinem überwiegend kreisförmigen Umfang des Gehäusemantels 19 tangential der Symmetrieachse 16 des Luftkanals 2 und des Rotationswärmetauschers 11 ausgerichtet. Aufgrund der umfänglich nahezu vollständig zylindrischen Ausführung des Gehäusemantels 19, der sich durch die Öffnung 15 in vollständiger Formgebung spiralförmig ausbildet, wendet sich der weitere Verlauf des Übergangsbereichs 17 von der Symmetrieachse 16 zunehmend ab, so dass die Anströmfläche 21 des Ventilators 7 mit der stirnseitig hälftigen Querschnittsfläche 33 des Rotationswärmetauschers 11 mit seiner Drehachse 39 geneigt zur Symmetrieachse 16 gerichtet ist. Der erste Ventilator 7 saugt durch eine Hälfte des Rotors 51 den warmen Abluft-Medienstrom 9 an, so dass sich die Kanalwandungen des Rotationswärmetauschers 11 aufwärmen. Durch die andere Hälfte des Rotors 51 des Rotationswärmetauschers 11 strömt, angesaugt vom zweiten Ventilator 8 durch die Luftleitführung 14, kalter Zuluft-Medienstrom 9. Mit Drehung um die Symmetrieachse 16 des Rotationswärmetauschers 11 während des Betriebs vermischen sich die Medienströme, je nach regulierbarer Umdrehung des Rotors 51 unterschiedlich. Dazu ist nach Fig. 5 der zweite Ventilator 8 außerhalb des Luftkanals 2 an der Gebäudewand 3 in einem Gehäuse 43 der Lüftungsvorrichtung 1 angeordnet. Bei gleicher Ausführungsform der Ventilatoren 7, 8, sind die Ventilatoren 7, 8 unterschiedlich zur Symmetrieachse 16 des Rotationswärmetauschers 11 ausgerichtet. Jeder Ventilator 7, 8 kann aber auch aufgrund des getrennten Einbauortes individuell in Form, Größe und Leistung ausgeführt sein. Der Gehäusemantel 20 des zweiten Ventilators 8, weist ebenfalls zur Anströmfläche 22 einen Übergangsbereich 18 auf und schneidet nahezu mit seiner Höhe 23 tangential die Symmetrieachse 16 des Luftkanals 2 und des Rotationswärmetauschers 11 linear. Die Drehachse 41 des zweiten Ventilators 8 verhält sich dabei parallel zur Symmetrieachse 16. Die Anströmfläche 22 des Ventilators 8 ist auf die hälftige Querschnittsfläche 35 der Seitenfläche 28 auf den Rotationswärmetauscher 11 zeigend parallel zu dieser ausgerichtet. Mit Drehen des Rotors 51, erreichen die aufgewärmten Kanäle des Rotationswärmetauschers 11 den Bereich, wo sie kalter Zuluft-Medienstrom 10 durchströmt. Diese wärmt sich an den warmen Kanälen des Abluft-Medienstroms 9 auf, wodurch sich die Kanalwandungen abkühlen.

Der Ventilator 8 ist dazu in vorteilhafter Anordnung orthogonal zur Symmetrieachse 16 und damit dem Luftkanal 2 und dem Rotationswärmetauscher 11 lagepositioniert.

Der erste Ventilator 7 wird im Luftkanal 2 um seinen äußeren Gehäusemantel 19 nach Fig. 6 von dem Trennelement 24 umschlossen. Das Trennelement 24 bildet eine horizontale Ebene 25 mit der Symmetrieachse 16 des Luftkanals 2 und des Rotationswärmetauschers 11 und teilt den Luftkanal 2 abdichtend in zwei gleiche Teile auf, aus denen sich die Luftleitführungen 13, 14 bilden. Beim vollumfänglichen Umschließen das Trennelement 24 des Ventilators 8, schließt das Trennelement 24 bündig an das Ende 26 der ersten Seitenfläche 27 des Rotationswärmetauschers 11 an. Das Trennelement 24 überdeckt im Luftkanal 2 die Anströmfläche 21 des ersten Ventilators 7, wobei die Teilung des Luftkanals 2 den Querschnitt 38 in zwei gleiche halbkreisförmige Hälften gliedert. Zwischen dem zweiten Ventilator 8 und der zweiten Seitenfläche 28 des Rotationswärmetauschers 11, schließt sich nach Fig. 2 am Ende 53 ein Führungselement 29 an. Das Führungselement 29 besteht dabei aus einem in der Querschnittsform trapezförmig umschlossenen Kanal, der die Strecke zum Anschluss zwischen dem Ventilator 8 und dem Rotationswärmetauscher 11 sicherstellt. Die horizontale Fläche 30 der umfänglichen Trapezform des Führungselementes 29 ist der Symmetrieachse 16 des Luftkanals 2 und des Rotationswärmetauschers 11 zugeordnet. Die Ausgestaltung verleiht der Lüftungsvorrichtung 1 außerhalb des Rotationswärmetauscher 11 einen getrennten Luftmedienstrom zweier entgegengesetzt durchlaufender Medienströme von Zuluft 10 und Abluft 9 durch die Lüftungsvorrichtung 1.

Erst mit Anfang des Rotationswärmetauschers 11 oder an den jeweiligen Enden 26, 53, endet die beidseitig der Seitenflächen 27, 28 des Rotationswärmetauschers 11 Zweistrom bildende Kanalführung. Im drehbeweglichen Betrieb des Rotors 51 vereinen sich die unterschiedlichen Temperaturdifferenzen der Luftmedienströme 9, 10. Der kalte Zuluft-Medienstrom 10 verändert mit Durchlaufen seine von der Außenseite 6 existente Eintrittstemperatur und bläst erwärmte Luft in die Innenseite 4 des Raumes 5.

Unabhängig von dem Luftkanal 2, kann das Führungselement 29 nach Fig. 2 Form gebend ausgestaltet werden. Fig. 2 und Fig. 5 zeigen das Führungselement 29 außerhalb des Luftkanals 2 auf der Innenseite 4 des Raumes 5 in einem Gehäuse 43. Bündig dichtend ist das Führungselement 29 einer Seitenfläche 28 des Rotationswärmetauschers 11 zugeordnet. Dabei schließt das Führungselement 29 außerdem mit dem zur Innenseite 4 weisenden Ende 52 des Luftkanals 2 bündig ab. Die Anströmfläche 22 des zweiten Ventilators 8 wird von der anderen Seite des Führungselementes 29 umfänglich geschlossen. Das Führungselement 29 bildet eine Brücke für den Zuluft-Medienstrom in Richtung Rotationswärmetauscher 11, die aufgrund der Anordnung klein und kompakt ausgebildet ist. Beide Anströmflächen 21, 22 weisen auf den Rotationswärmetauscher 11 zu.

Mit dem Trennelement 24 und die damit dichtend umgreifende horizontale Ebene 25 nach Fig. 6, sowie die horizontale Fläche 30 des Führungselementes 29 nach Fig. 2, werden die Luftleitführungen 13, 14 gebildet und ermöglichen eine zusätzliche räumliche Trennung der Luftströme 9, 10 beim Übergang zwischen den Ventilatoren 7, 8 und dem Rotationswärmetauscher 11 nach Fig. 5. In einem Gegenstrombetrieb wird so die abgesaugte Abluft 9 in einem Abstand zu frisch eingeströmten Zuluft 10 angesaugt, so dass eine Vermischung von beiden Luftströmen 9, 10 vermieden wird, aber eine Vermischung von Warm und Kalt im Rotationswärmetauscher 11 erreicht wird.

Nach Fig. 5 und Fig. 6 reicht der erste Ventilator 7 mit seiner Anströmfläche 21 am Übergangsbereich 17 zum Gehäusemantel 19 an eine horizontal gedachte Schnittebene 31 des ersten Endes 26 nach Fig. 7 des Rotationswärmetauschers 11 heran und ist einer ersten hälftigen Querschnittfläche 33 des Rotationswärmetauschers 11 zugeordnet. Auch der zweite Ventilator 8 reicht mit seiner Anströmfläche 22 vom Gehäusemantel 20 auf der anderen Seite an die Schnittebene 31 des zweiten Endes 52 des Rotationswärmetauschers 11 heran und ist einer zweiten hälftigen Querschnittfläche 35 des Rotationswärmetauschers 11 zugehörig. Mit einem geführten Medienstrom von der Abluft und der Zuluft und einer Aufteilung der Querschnittfläche des Rotationswärmetauschers 11 für die Medienströme, wird ein gleichmäßig kontrollierter Wirkungsgrad erzielt.

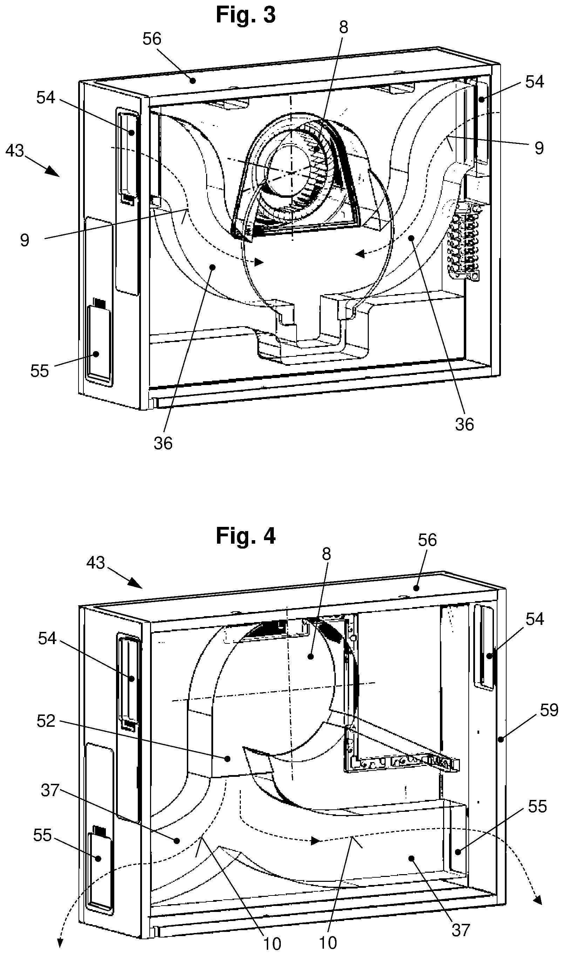

Das am ersten Ventilator 7 angeordnete Trennelement 24 nach Fig. 6 grenzt an die zur Außenseite 6 weisende Seitenfläche 27 des Rotationswärmetauscher 11 und des Führungselementes 29 nach Fig. 3 mit der horizontalen Fläche 30 an die zur Innenseite 4 gerichtete Seitenfläche 28 des Rotationswärmetauschers 11 an. Das Trennelement 24 und das Führungselement 29 bilden zusammen nach Fig. 5 zwei getrennte Strömungskanäle 36, 37 im Luftkanal 2, von dem der eine Strömungskanal den Abluftkanal 36 und der zweite Strömungskanal den Zuluftkanal 37 ausbildet. Der erste und zweite Luftstrom 9, 10, sind dabei fluidisch Leistung bezogen auf den Massestrom, in der innenraumseitigen Lüftungsvorrichtung 1 vollständig getrennt.

In Fig. 4 aufgezeigt, ist das Gehäuse 43 mit räumlicher Darstellung eines Gehäusedeckels 56, dessen Vorderseite die Anlagefläche 59 der nach Fig. 5 dargestellte Flächen 60 der Gebäudewand 3 sind. Die Anordnung der innenraumseitigen Einlässe 54 nach Fig. 3 und Auslässe 55 nach Fig. 4, sind aus optischer und konstruktiver Betrachtung an den Seiten des Gehäusedeckels 56 des Gehäuses 43 angeordnet. In Verbindung mit den Luftstromführungen ausgehend von der Außenseite 6 mit dem Luftkanal 2 und das darin angeordnete Trennelement 24, übergehend in das Gehäuse 43 mit dem Führungselement 29 und den Strömungskanälen 36, 37, schließen sich bis zur Innenseite 4 die Einlässe 54 und Auslässe 55 an, welche die räumliche Trennung der Luftströme 9, 10 bis zur Innenseite 4 des Raumes 5 abschließen. So wird eine Vermischung von beiden Luftströmen 9, 10 vermieden. Die direkte Anordnung der Bauteile erlaubt eine Kompakte Bauweise der Lüftungsvorrichtung 1. Den Luftkanal 2 nach Fig. 6 und den Rotationswärmetauscher 11 nach Fig. 7 der Lüftungsvorrichtung 1 nach Fig.1 und Fig. 2 im Querschnitt zylindrisch auszubilden, ist für eine Drehbewegung des Rotors 51 bei umfänglich dichtender Wirkung des Rotationswärmetauschers 11 ohne zusätzliche Bauteile maßgebend und für eine einfache und kostengünstige Montage der Lüftungsvorrichtung 1 von Bedeutung.

Der erste Ventilator 7 fördert nach Fig. 3 den Abluft-Medienstrom 9 aus der Innenseite 4 zur Außenseite 6 durch den Abluftkanal 36. Der zweite Ventilator 8 bewegt nach Fig. 4 den Zuluft-Medienstrom 10 von der Außenseite 6 zur Innenseite 4 durch den Zuluftkanal 37. Im Betrieb der Lüftungsvorrichtung 1 sind beide Medienströme 9, 10 im permanenten Einsatz und durchströmen den Rotationswärmetauscher 11. Die Radialventilatoren 7, 8 pressen dabei die angesogene warme Raumluft 9 sehr kraftvoll und leiten diese gebündelt um. Die Radialventilatoren 7, 8 eignen sich ideal für den Anschluss der Lüftungsvorrichtung 1 zur kontrollierten Wohnraumlüftung in Verbindung mit dem Rotationswärmetauscher 11. Um den Luftstrom mit einströmender, kühler Außenluft 10 über das wärmespeichernde Modul des Rotationswärmetauschers 11 optimal in einen warmen Luftstrom umzuwandeln, so dass der beheizte Luftstrom seine Energie in die Innenseite 4 des Raums 5 leiten kann, bedarf es, wie nach der Fig. 1 und Fig. 5 aufgezeigt, einer geschlossenen Lüftungsvorrichtung 1. Der Luftstrom des Zuluft-Medienstroms 10 und Abluft-Medienstroms 9 benötigt eine bestimmte Strecke von der Außenseite 6 zur Innenseite 4 und umgekehrt, die je nach Stärke der Gebäudewand 3 variieren kann. Hinzu kommt die Umwandlung von einem kühlen Zuluft-Medienstrom 10 durch Vermischung des Abluft-Medienstroms 9 in einen warmen Zuluft-Medienstrom 10 im Rotationswärmetauscher 11, bevor der warme Zuluft-Medienstrom 10 in die Innenseite 4 des Raums 5 geleitet wird. Solchen Strecken mit einer Wärmebehandlung, werden mit der Wahl von Radialventilatoren 7, 8 einfach und leistungsbeständig bewältigt.

Mit getrennt räumlicher Anordnung der Ventilatoren 7, 8 nach Fig. 5, kann jeder Ventilator 7, 8 dem Bauraum der Lüftungsvorrichtung 1 der Größe entsprechend angepasst werden. Um den Luftkanal 2 im Querschnitt für eine vereinfachte Montage in die Gebäudewand 3 bei optimaler Luftleistung der Ventilatoren 7, 8 in seinen Abmaßen klein und kostengünstig auszuführen zu können, ist der im Luftkanal 2 angeordnete erste Ventilator 7 dem Querschnitt 38 des Luftkanals 2 nahezu spielfrei angepasst. Ferner ist die Drehachse 39 des ersten Ventilators 7 zu der Symmetrieachse 16 des Luftkanals 2 unter einem spitzen Winkel 40 geneigt ausgerichtet. Die Drehachse 41 des zweiten Ventilators 8, verläuft mit einem parallelen Abstand 42 zur Symmetrieachse 16 des Luftkanals 2 und ist außerhalb des Luftkanals 2 an der Gebäudewand 3 positioniert. Durch die schräge Drehachse 39 des rotierenden Ventilatorrades 61 des ersten Ventilators 7 zur Symmetrieachse 16 des Luftkanals 2, wird der Abluft-Medienstrom 9 vor dem Eintritt in den Rotationswärmetauscher 11 zusätzlich verwirbelt, so dass der Rotationswärmetauscher 11 gleichmäßiger angeströmt werden kann. Eine solche Anordnung des Ventilators 7 führt auch zu einem niedrigen Stromverbrauch. Insbesondere ist es hierbei vorteilhaft, wenn die Drehachse 39 des Ventilatorrades 61 um einen Winkel zwischen 10° und 80° in Relation zu einer Längsausrichtung des Luftkanals 2 und damit zur Symmetrieachse 16 gedreht ist.

Zu dem im Querschnitt zylindrischen Luftkanal 2 nach Fig. 1, Fig. 2 und Fig. 6, passt sich konstruktiv der Gehäusemantel 19 des ersten Ventilators 7 an, der vollumfänglich kreisförmig ausgebildet ist. Für eine einfache Montage und kostengünstige Variante der Lüftungsvorrichtung 1, ist der zweite Ventilator 8 dem ersten Ventilator 7 angepasst. Ferner sind die Anströmflächen 21, 22 der Ventilatoren 7, 8 nach Fig. 3 und Fig. 6 umfänglich ringförmig ausgebildet. Nach Fig. 4 weist der zweite Ventilator 8 ebenfalls eine Öffnung 52 auf, die am Gehäusemantel 20 angeordnet den Zuluft-Medienstrom 10 in die im Gehäuse 43 angeordneten Strömungskanäle 37 verteilt und weiterführend über die Auslässe 55 in die Innenseite 4 des Raumes 5 abgeben.

Die sichtbaren Bauteile der Lüftungsvorrichtung 1 bestehen nach Fig. 1 aus dem Luftkanal 2 mit Anschluss des Gehäuses 43, welches nach Fig. 5 auf der Innenseite 4 des Raumes 5 an der Gebäudewand 3 angeordnet ist. Mit Beibehaltung des zylindrischen Querschnitts und Größe des Luftkanals 2, welcher der Querschnittsfläche 33 des Rotationswärmetauschers 11 entspricht, nimmt das Gehäuse 43 nach Fig. 2 den Antriebsmotor 12 und nach Fig. 3 den zweiten Ventilator 8 auf, wobei der erste Ventilator 7 und der Rotationswärmetauscher 11 nach Fig. 5 dem Luftkanal 2 zugeordnet sind. Außerdem beinhaltet das Gehäuse 43 nach Fig. 3 und Fig. 4 Kanäle 36, 37 für eine Luftführungseinrichtung zur Führung des Zuluft-Medienstroms 10 und eine Luftführungseinrichtung zur Führung des Abluft-Medienstroms 9 mit jeweils getrennten Einlässen 54 und Auslässen 55 an den Wandungen des Gehäusedeckels 56 auf der Innenseite 4 des Raumes 5.

Nach Fig. 2 weist die Lüftungsvorrichtung 1 im Gehäuse 43 auf einer Gehäuseplatte 57 unbeweglich befestigt eine elektronische Steuerungseinrichtung 58 auf, die ausgebildet ist, den Empfang eines Steuersignals auf den ersten oder den zweiten Ventilator 7, 8 in einer durch das Steuersignal definierten Drehzahl und Drehrichtung in Betrieb zu setzen. Das Steuersignal kann dabei sowohl direkt an der Lüftungsvorrichtung 1, beispielsweise durch eine Nutzereingabe erzeugt werden, oder aber es ist der Empfang des Steuersignals beispielsweise von einer zentralen Steuerungseinrichtung 58 möglich. Dieses kann sowohl über eine Verkabelung als auch über drahtlose Vermittlung erfolgen. Unterschiedliche Drehzahlen der Ventilatoren 7, 8 entsprechen dabei unterschiedlichen Volumenströmen des jeweiligen Luftstroms 9, 10.

Die Steuereinrichtung 58 weist dazu eine Platine auf, an der alle antreibenden Bauteile elektrisch verbunden sind. Alle elektronischen Bauteile z.B. auch Sensoren und alle beweglich antreibenden Bauteile sind im Gehäuse 43 angeordnet, so dass beispielweise zu Wartungszwecken der voranstehenden Komponenten nur der Gehäusedeckel 56 von der Gehäuseplatte 57 von der Innenseite 4 des Raumes 5 von einem autorisierten Fachmann aus der Lüftungsvorrichtung 1 entnommen werden kann. Somit umhüllt das Gehäuse 43 nach Fig. 1 schützend und kompakt alle Funktionsbauteile der Lüftungsvorrichtung 1, welche sich einfach und schnell im Gehäuse 43 verschiebbar lagefixiert montieren und demontieren lassen. Die integrierten Funktionsbauteile im Gehäuse 43 sind im eingebauten Zustand völlig verdeckt angeordnet. Mögliche Verschmutzungen, die zu einer Beeinträchtigung der Lebensdauer der Lüftungsvorrichtung 1 beitragen können, werden durch die dichtende Verbindung des Gehäuses 43 ausgeschlossen.

Die Steuerungseinrichtung 58 arbeitet dabei vorrangig für die stufenlose Steuerung der Drehzahl und Drehrichtung einer Rotoreinheit 51 des Antriebsmotors 12 und kann auch nicht dargestellt separat angeordnet sein. Kompakt aufgebaut lässt sich die Steuerungseinrichtung 58 an dem Antriebsmotor 12 integrieren. Dabei ist der Antriebsmotor 12 ortsfest im Gehäuse 43 gelagert. Vorzugsweise ist der Antriebsmotor 12 ein Elektromotor, der mit seiner Drehachse 44 außerhalb des zylindrischen Umfangs 45 des Rotationswärmetauschers 11 und versetzt zu dessen Symmetrieachse 16 angeordnet ist.

Der Antriebsmotor 12 nach Fig. 9 ist als Außenläufermotor ausgeführt, der mittels eines Antriebsrotors 46 durch ein Form- und/oder Reibschluss den Rotationswärmetauscher 11 ohne Kopplungseinrichtung unmittelbar antreibt. Der Rotationswärmetauscher 11 und Außenläufermotor 12, sind nach Fig. 7 nicht der Symmetrieachse 16 zugeordnet und benötigen dadurch keine Kopplungseinheit.

Weiter in Fig. 7 und Fig. 8 dargestellt, kontaktieren sich der Antriebsrotor 46 und der Rotationswärmetauscher 11 mit Anordnung nebeneinander. Dazu weisen der Antriebsrotor 46 des Antriebsmotors 12 und/oder der Rotationswärmetauscher 11 an ihren Außenumfängen 47, 48 ein Oberflächenmaterial mit geeignet hohem Rollreibungsbeiwert auf, so dass sie reibschlüssig miteinander über die Oberflächen der Außenumfänge 47, 48 direkt verbunden sind.

Dem aufgezeigten Ausführungsbeispiel nach Fig. 7 und Fig. 8 zu entnehmen, weisen der Antriebsmotors 12 auf den Rotationswärmetauscher 11 an ihren Außenumfängen 47, 48 eine Verzahnung 49, 50 auf, so dass sie formschlüssig ineinandergreifen und über die Verzahnung 49, 50 direkt verbunden sind. Die Verzahnung 49, 50 wirkt besonders effektiv gegen einen Schlupf des Antriebsmotors 12 relativ zum Rotationswärmetauscher 11. Andere Varianten einer Antriebsverbindung, wie Beispielsweise mit einem Keilriemen, sind ebenso möglich.

### Bezugszeichenliste

- 1: Lüftungsvorrichtung
- 2: Luftkanal
- 3: Gebäudewand
- 4: Innenseite
- 5: Raum
- 6: Außenseite
- 7: Ventilator, Abluft
- 8: Ventilator, Zuluft
- 9: Abluft-Medienstrom
- 10: Zuluft-Medienstrom
- 11: Rotationswärmetauscher
- 12: Antriebsmotor
- 13: Luftleitführung, Abluft
- 14: Luftleitführung, Zuluft
- 15: Öffnung
- 16: Symmetrieachse
- 17: Übergangsbereich
- 18: Übergangsbereich
- 19: Gehäusemantel
- 20: Gehäusemantel
- 21: Anströmfläche
- 22: Anströmfläche
- 23: Höhe
- 24: Trennelement
- 25: Ebene, horizontal
- 26: Ende
- 27: Seitenfläche
- 28: Seitenfläche
- 29: Führungselement
- 30: Fläche, horizontal
- 31: Seitenfläche
- 32: Schnittebene
- 33: Querschnittsfläche
- 34: Ende Schnittebene
- 35: Querschnittsfläche
- 36: Strömungskanal, Abluftkanal
- 37: Strömungskanal, Zuluftkanal
- 38: Querschnitt
- 39: Drehachse
- 40: Winkel
- 41: Drehachse
- 42: Abstand
- 43: Gehäuse
- 44: Drehachse
- 45: Umfang
- 46: Antriebsrotor
- 47: Außenumfang
- 48: Außenumfang
- 49: Verzahnung
- 50: Verzahnung
- 51: Rotor
- 52: Öffnung
- 53: Ende
- 54: Einlass
- 55: Auslass
- 56: Gehäusedeckel
- 57: Gehäuseplatte
- 58: Steuerungseinrichtung
- 59: Anlagefläche
- 60: Fläche
- 61: Ventilatorrad

## Patentansprüche

1. Lüftungsvorrichtung (1) zur Belüftung und Entlüftung von Räumen eines Gebäudes, mit einem Luftkanal (2) zur Verbindung von einer Gebäudewand (3) getrennten Innenseite (4) des Raumes (5) mit einer Außenseite (6), mit einem in dem Luftkanal (2) angeordneten ersten Ventilator (7) und einem außenhalb des Luftkanals (2) aufweisenden zweiten Ventilator (8), die in einem Betriebszustand gleichzeitig mit entgegengesetzten Luftförderrichtungen zur Förderung von einem Zuluft-Medienstrom (10) von der Außenseite (6) zur Innenseite (4) des Raumes (5) und zur Förderung von einem Abluft-Medienstrom (9) von der Innenseite (4) des Raumes (5) zur Außenseite (6) für einen kontinuierlichen Austausch betreibbar sind, wobei in dem Luftkanal (2) zwischen den Ventilatoren (7, 8) ein Rotationswärmetauscher (11) angeordnet ist, der von einem Antriebsmotor (12) angetrieben ist,
**dadurch gekennzeichnet,**
**dass** sich der Luftkanal (2) in zwei Luftleitführungen (13, 14) aufteilt, die den Zuluft-Medienstrom (10) von dem Abluft-Medienstrom (9) räumlich voneinander trennen, und dass der erste Ventilator (7) ein Radialventilator ist, der mit einer Anströmfläche (21) und einer Öffnung (15) für den Abluft-Medienstrom (9) in der Luftleitführung (13) angeordnet ist.

2. Lüftungsvorrichtung (1) nach Anspruch 1,
**dadurch gekennzeichnet,**
**dass** der erste Ventilator (7) mit seiner Anströmfläche (21) zum Rotationswärmetauscher (11) weisend den Abluft-Medienstrom (9) ansaugt und um einen 90° versetzten Winkel auf die Öffnung (15) eines umfänglichen Gehäusemantels (19) ausbläst.

3. Lüftungsvorrichtung (1) nach Anspruch 1,
**dadurch gekennzeichnet,**
**dass** der Luftkanal (2) und der Rotationswärmetauscher (11) eine Symmetrieachse (16) bilden, wobei die jeweiligen Ventilatoren (7, 8) einen außenseitigen Übergangsbereich (18, 18) aufweisen, der sich aus den umfänglichen Gehäusemantel (19, 20) zu der Anströmfläche (21, 22) bildet, wobei der erste Ventilator (7) mit seinem Übergangsbereich (17) zur Symmetrieachse (16) ausgerichtet ist und der zweite Ventilator (8) mit einer Höhe (23) des Gehäusemantels (20) zur Symmetrieachse (16) lagepositioniert ist.

4. Lüftungsvorrichtung (1) nach Anspruch 1,
**dadurch gekennzeichnet,**
**dass** auf der Seite des ersten Ventilators (7) zum Rotationswärmetauscher (11) ein Trennelement (24) und auf der Seite des zweiten Ventilators (8) zum Rotationswärmetauscher (11) ein Führungselement (29) angeordnet sind, welche den Führungskanal (2) in die zwei Luftleitführungen (15, 16) aufteilt.

5. Lüftungsvorrichtung (1) nach einem oder mehreren der Ansprüche 1 bis 4,
**dadurch gekennzeichnet,**
**dass** der erste Ventilator (7) im Luftkanal (2) um seinen äußeren Gehäusemantel (19) das Trennelement (24) aufweist, das eine horizontale Ebene (25) mit der Symmetrieachse (16) des Luftkanals (2) und des Rotationswärmetauschers (11) bildet und sich mit einem Ende (26) einer ersten Seitenfläche (27) des Rotationswärmetauschers (11) anschließt, wobei sich zwischen dem zweiten Ventilator (8) und der zweiten Seitenfläche (28) des Rotationswärmetauschers (11) das Kanal bildende Führungselement (29) anschließt, das mit einer horizontalen Fläche (30) der Symmetrieachse (16) des Luftkanals (2) und des Rotationswärmetauschers (11) zugeordnet ist.

6. Lüftungsvorrichtung (1) nach einem oder mehreren der Ansprüche 1 bis 5,
**dadurch gekennzeichnet,**
**dass** das Trennelement (24) am ersten Ventilator (7) und die horizontale Fläche (30) des Führungselementes (29) am zweiten Ventilator (8) eine Trennung zwischen den jeweiligen Anströmflächen (21, 22) der Ventilatoren (7, 8) bildet, welche bis zum Rotationswärmetauscher (11) heranreichen.

7. Lüftungsvorrichtung (1) nach Anspruch 1,
**dadurch gekennzeichnet,**
**dass** der erste Ventilator (7) mit seiner Anströmfläche (21) am Übergangsbereich (17) zum Gehäusemantel (19) an eine Schnittebene (31) des ersten Endes (32) des Rotationswärmetauschers (11) heranreicht und einer ersten hälftigen Querschnittfläche (33) des Rotationswärmetauschers (11) zugeordnet ist, wobei der zweite Ventilator (8) mit seiner Anströmfläche (22) vom Gehäusemantel (20) an die Schnittebene (31) des zweiten Endes (34) des Rotationswärmetauschers (11) heranreicht und einer zweiten hälftigen Querschnittfläche (35) des Rotationswärmetauschers (11) zugehörig ist.

8. Lüftungsvorrichtung (1) nach Anspruch 4,
**dadurch gekennzeichnet,**
**dass** das Trennelement (24) und die horizontale Fläche (30) zwei getrennte Strömungskanäle (36, 37) im Luftkanal (2) bilden, von dem ein Strömungskanal als Abluftkanal (36) und ein Strömungskanal als Zuluftkanal (37) ausgebildet sind.

9. Lüftungsvorrichtung (1) nach Anspruch 1,
**dadurch gekennzeichnet,**
**dass** der Luftkanal (2) und der Rotationswärmetauscher (11) im Querschnitt zylindrisch ausgebildet sind.

10. Lüftungsvorrichtung (1) nach Anspruch 1 und 8,
**dadurch gekennzeichnet,**
**dass** der erste Ventilator (7) als Radialventilator ausgebildet den Abluft-Medienstrom (9) aus der Innenseite (4) zur Außenseite (6) durch den Abluftkanal (36) fördert und der zweite Ventilator (8) ein Radialventilator ist, der den Zuluft-Medienstrom (10) von der Außenseite (6) zur Innenseite (4) fortbewegt, wobei beide Medienströme (9, 10) den Rotationswärmetauscher (11) permanent durchströmen.

11. Lüftungsvorrichtung (1) nach Anspruch 1,
**dadurch gekennzeichnet,**
**dass** der im Luftkanal (2) angeordnete erste Ventilator (7) dem Querschnitt (38) des Luftkanals (2) angepasst ist, und die Drehachse (39) des Ventilators (7) zu der Symmetrieachse (16) des Luftkanals (2) unter einem spitzen Winkel (40) ausgerichtet ist, wobei die Drehachse (41) des zweiten Ventilators (8) mit einem parallelen Abstand (42) zur Symmetrieachse (16) des Luftkanals (2) verläuft.

12. Lüftungsvorrichtung (1) nach Anspruch 1,
**dadurch gekennzeichnet,**
**dass** der Gehäusemantel (19, 20) der Ventilatoren (7, 8) mit den jeweiligen Öffnungen (15, 52) vollumfänglich spiralförmig ausgebildet sind, wobei die Anströmflächen (21, 22) der Ventilatoren (7, 8) umfänglich ringförmig ausgebildet sind.

13. Lüftungsvorrichtung (1) nach Anspruch 1,
**dadurch gekennzeichnet,**
**dass** sich dem Luftkanal (2) der Lüftungsvorrichtung (1) ein Gehäuse (43) anschließt, welches auf der Innenseite (4) des Raumes (5) an der Gebäudewand (3) angeordnet ist.

14. Lüftungsvorrichtung (1) nach den Ansprüchen 1 und 13,
**dadurch gekennzeichnet,**
**dass** das Gehäuse (43) den Antriebsmotor (12) und den zweiten Ventilator (8) aufnimmt, wobei der erste Ventilator (7) und der Rotationswärmetauscher (11) dem Luftkanal (2) zugeordnet sind.

15. Lüftungsvorrichtung (1) nach den Ansprüchen 1 und 9,
**dadurch gekennzeichnet,**
**dass** der Antriebsmotor (12) ein Elektromotor ist, der mit seiner Drehachse (44) außerhalb des zylindrischen Umfangs (45) des Rotationswärmetauschers (11) und versetzt zu dessen Symmetrieachse (16) angeordnet ist.

16. Lüftungsvorrichtung (1) nach Anspruch 1,
**dadurch gekennzeichnet,**
**dass** der Antriebsmotor (12) vorzugsweise ein Außenläufermotor ist, der mittels eines Antriebsrotors (46) durch ein Form- und/oder Reibschluss den Rotationswärmetauscher (11) ohne Kopplungseinrichtung unmittelbar antreibt.

17. Lüftungsvorrichtung (1) nach Anspruch 16,
**dadurch gekennzeichnet,**
**dass** der Antriebsrotor (46) und Rotationswärmetauscher (11) berührend nebeneinander angeordnet sind, wobei der Antriebsrotor (46) und/oder der Rotationswärmetauscher (11) an ihren Außenumfängen (47, 48) ein Oberflächenmaterial mit geeignet hohem Rollreibungsbeiwert aufweisen, so dass sie reibschlüssig miteinander über die Oberflächen der Außenumfänge (47, 48) direkt verbunden sind.

18. Lüftungsvorrichtung (1) nach Anspruch 16,
**dadurch gekennzeichnet,**
**dass** der Antriebsrotor (46) und der Rotationswärmetauscher (11) an ihren Außenumfängen (47, 48) eine Verzahnung (49, 50) aufweisen, so dass sie formschlüssig ineinandergreifen und über die Verzahnung (49, 50) direkt verbunden sind.
